# EUROPEAN PATENT APPLICATION

(11) **EP 4 737 041 A1**
(43) Date of publication of application: **06.05.2026**
(21) Application number: 25211150.5
(22) Date of filing: 24.10.2025
(51) Int. Cl.: B23H 11/00, B23H 9/14

(54) **SYSTEM AND METHOD FOR CHARACTERIZING AN ELECTRICAL DISCHARGE DRILLING PROCESS USING ULTRASOUND**

(30) Priority: 24.10.2024 US 202463711221 P
(71) Applicant: PRATT & WHITNEY CANADA CORP., Longueuil, Québec J4G 1A1 (CA)
(72) Inventor: ING, Visal, (01BE5) Longueuil, J4G 1A1 (CA); LETENDRE, Etienne, (01BE5) Longueuil, J4G 1A1 (CA); MANSUR RODRIGUES FILHO, Jorge Franklin, (01BE5) Longueuil, J4G 1A1 (CA)
(74) Representative: Dehns

(57) **Abstract**

Systems (10) and methods for characterizing an electrical discharge drilling process using ultrasound are provided. The characterization of the electrical discharge drilling process facilitates estimating cycle times and electrode (18) consumptions for future electrical discharge drilling tasks. An electrical discharge drilling machine includes a base (14) for supporting a workpiece (16), an electrode (18) operable to drill a hole (20) in the workpiece (16) using an electrical discharge, and an ultrasonic probe (30) installed on the base (14) and oriented toward the workpiece (16) when the workpiece (16) is supported by the base (14).

## Description

### TECHNICAL FIELD

The disclosure relates generally to electrical discharge machining, and more particularly to characterizing an electrical discharge drilling process.

### BACKGROUND

Electrical discharge drilling is used for precision drilling in aerospace-grade metals with low machinability. Drilling speed using electrical discharge drilling can depend on many process parameters and evolving dynamic conditions such as injection pressure, cleaning efficiency and electrode consumption, which can vary non-linearly. Some electrical discharge machines can adapt to the real conditions inside the hole being drilled such that if there is excessive debris, the next spark will not be generated and the drilling feed rate will adapt accordingly. The electrode consumption may also vary with increased hole depth as the injection of flushing liquid becomes less effective. Estimating and planning for electrical discharge drilling tasks is challenging.

### SUMMARY

In one aspect, the disclosure describes an electrical discharge drilling machine comprising:
a base for supporting a workpiece;
an electrode operable to drill a hole in the workpiece using an electrical discharge when the workpiece is supported by the base; and
an ultrasonic sensor installed on the base and oriented toward a location of the workpiece when the workpiece is supported by the base, the ultrasonic sensor being operable to sense a depth of the hole during drilling of the hole by:
   emitting an input sound wave into the workpiece; and
   sensing a reflected sound wave reflected from a closed end of the hole.

The ultrasonic sensor may be received inside an aperture formed in the base.

The ultrasonic sensor may be one of a plurality of ultrasonic sensors. The ultrasonic sensors may be received inside respective apertures formed in the base.

The electrode may include a rotatable tube configured to receive a flushing liquid therethrough while drilling the hole in the workpiece.

A longitudinal axis of the electrode is non-normal to a support surface of the base configured to support the workpiece.

Embodiments may include combinations of the above features.

In another aspect, the disclosure describes a system for characterizing an electrical discharge drilling process using ultrasound. The system comprises:
a workpiece having a first side and a second side opposite the first side;
a rotatable tubular electrode configured to drill a hole in the workpiece from the first side of the workpiece using an electrical discharge; and
an ultrasonic sensor coupled to the second side of the workpiece and oriented toward the rotatable tubular electrode, the ultrasonic sensor being operable to sense a depth of the hole during drilling of the hole by:
   emitting an input sound wave into the workpiece via the second side of the workpiece; and
   sensing a reflected sound wave reflected from a closed end of the hole via the second side of the workpiece.

The system may comprise a base supporting the workpiece. The ultrasonic sensor may be installed on the base.

The ultrasonic sensor may be received inside an aperture formed in the base.

The ultrasonic sensor may be one of a plurality of ultrasonic sensors. The ultrasonic sensors may be received inside respective apertures formed in the base.

A longitudinal axis of the rotatable tubular electrode may be non-normal to a support surface of the base supporting the workpiece.

The ultrasonic sensor may have a field of view that includes both an entrance of the hole and the closed end of the hole at a final depth of the hole.

The ultrasonic sensor may be part of an ultrasonic probe that is in contact with the second side of the workpiece.

The ultrasonic probe may be part of a base supporting the workpiece during the drilling of the hole.

Embodiments may include combinations of the above features.

In a further aspect, the disclosure describes a method of characterizing an electrical discharge drilling process using ultrasound. The method comprises:
drilling a hole in a workpiece from a first side of the workpiece using an electrical discharge delivered using a rotating electrode;
during the drilling of the hole, sensing a depth of the hole using ultrasound from a second side of the workpiece opposite the first side of the workpiece, the sensing of the depth of the hole including:
   emitting an input sound wave into the workpiece via the second side of the workpiece; and
   sensing a reflected sound wave reflected from a closed end of the hole via the second side of the workpiece.

The method may comprise determining a consumption of the rotating electrode by:
sensing a first depth of the hole when a holder of the rotating electrode is at a first position during the drilling of the hole; and
after sensing the first depth of the hole, sensing a second depth of the hole when the holder of the rotating electrode is at a second position different from the first position during the drilling of the hole.

Sensing the depth of the hole may be performed using an ultrasonic probe embedded into a base supporting the workpiece during the drilling of the hole.

Sensing the depth of the hole using ultrasound may include sensing the reflected sound wave simultaneously with the electrical discharge.

The hole may be a first hole. The ultrasonic probe may be a first ultrasonic probe. The method may include: drilling a second hole in the workpiece from the first side of the workpiece using the rotating electrode or another rotating electrode; and during the drilling of the second hole, sensing a depth of the second hole using a second ultrasonic probe embedded into the base.

The method may comprise: constructing a data library including data indicative of a plurality of depths of the hole sensed during the drilling of the hole and actual process parameters used to drill the hole; receiving a task description describing a future electrical discharge drilling task; using the task description and the data library, generating one or more estimated process parameters for the future electrical discharge drilling task; and using the one or more estimated process parameters to perform the future electrical discharge drilling task.

The one or more estimated process parameters may include: a cycle time for performing the future electrical discharge drilling task; an electrode consumption for performing the future electrical discharge drilling task; a spark generator setting suitable for performing the future electrical discharge drilling task; and/or a setting of an electrical discharge machine used for performing the future electrical discharge drilling task.

Embodiments may include combinations of the above features.

Further details of these and other aspects of the subject matter of this application will be apparent from the detailed description included below and the drawings.

### DESCRIPTION OF THE DRAWINGS

Reference is now made to the accompanying drawings, in which:
FIG. 1 is a schematic cross-sectional view of a system for characterizing an electrical discharge drilling process using ultrasound;
FIG. 2 is a schematic cross-sectional view of another system for characterizing the electrical discharge drilling process using ultrasound;
FIG. 3 is a schematic cross-sectional view of another system for characterizing the electrical discharge drilling process using ultrasound;
FIG. 4 is a perspective view of an exemplary instrumented base of an electrical discharge machine;
FIG. 5 is a flow diagram of an exemplary method for characterizing an electrical discharge drilling process using ultrasound;
FIG. 6 is a schematic illustration of the method of characterizing the electrical discharge drilling process;
FIG. 7 shows an exemplary data library constructed to characterize the electrical discharge drilling process;
FIG. 8 is a schematic diagram of a computer for generating estimated process parameters for a future electrical discharge drilling task; and
FIG. 9 is a schematic diagram illustrating the estimated process parameter(s) being supplied to an electrical discharge machine.

### DETAILED DESCRIPTION

The present disclosure describes systems and methods for characterizing an electrical discharge drilling process using ultrasound. The systems and methods described herein may promote characterization accuracy so that the ultrasonic characterization may be useful in planning for and executing future electrical discharge drilling tasks. In some embodiments, a system may include an ultrasonic sensor positioned on a side of the workpiece that is opposite an electrode so that a depth of a hole formed into the workpiece may be sensed directly, without interference from the electrode or other aspects of the electrical discharge drilling process, and also without interrupting the electrical discharge drilling process. The depth of the hole may optionally be sensed substantially continuously (e.g., using a maximum available sampling rate) and/or simultaneously with the electrical discharge(s) (i.e., during spark erosion).

The ultrasonic depth measurements may be used to determine parameters such as electrode consumption rates and material removal rates as a function of hole depth. Ultrasonic characterization may also be used to estimate cycle times, costs and consumables for future electrical discharge drilling tasks. The ultrasonic characterization may also be useful in selecting suitable process parameters such as spark generator settings and other electrical discharge machine (EDM) settings for future electrical discharge drilling tasks.

Aspects of various embodiments are described below through reference to the drawings.

The term "coupled to" may include both direct coupling (in which two elements that are coupled to each other contact each other) and indirect coupling (in which at least one additional element is located between the two elements). The term "substantially" as used herein may be applied to modify any quantitative representation which could permissibly vary without resulting in a change in the basic function to which it is related. As used herein, the singular forms "a," "an," and "the" are intended to include the plural forms as well, unless the context clearly indicates otherwise.

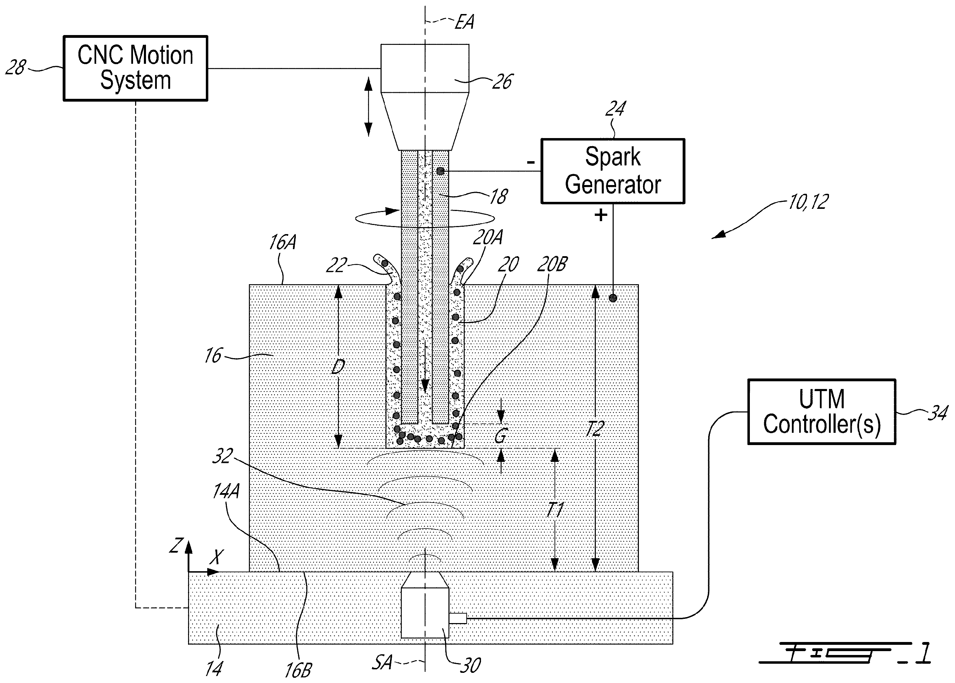

FIG. 1 is a schematic cross-sectional view of system 10 for characterizing an electrical discharge drilling process using ultrasound. System 10 may include a suitable electrical discharge machine (EDM) 12 that has been equipped with ultrasound thickness measurement (UTM) functionality. System 10 may be used during a process characterization (i.e., testing) phase and EDM 12 or other EDM without such UTM functionality may later be used during regular production of components with data either directly measured or derived from the process characterization phase.

System 10 may include base 14 for supporting one or more workpieces 16 (referred hereinafter in the singular), one or more electrodes 18 (referred hereinafter in the singular) operable to drill cylindrical hole(s) 20 in workpiece 16 using an electrical discharge when workpiece 16 is supported by base 14, and one or more ultrasonic sensors 30 installed on base 14 or at another location, and oriented toward workpiece 16 when workpiece 16 is supported by base 14. Workpiece 16 may be a test sample that is used for the purpose of the characterization of the electrical discharge drilling process. Workpiece 16 may be made of a same or similar material as one or more production part(s) to be drilled but may not necessarily have the same shape and configuration as the corresponding production part(s).

EDM 12 may be configured to perform drilling by electrical discharge machining, also known as spark machining or spark eroding, whereby hole 20 is formed into workpiece 16 using electrical discharge(s) (sparks) that erode material from workpiece 16. Material is removed from workpiece 16 by a series of rapidly recurring current discharges between electrode 18 and workpiece 16, which are separated by spark-gap G that is filled with dielectric flushing liquid 22, and which are subjected to an electric voltage. The electric voltage between electrode 18 and workpiece 16 may be applied via a suitable spark generator 24, also known as a pulse generator, operatively (electrically) connected to electrode 18 and to workpiece 16. When the voltage between electrode 18 and workpiece 16 is increased, the intensity of the electric field in the volume of spark-gap G between electrode 18 and workpiece 16 becomes greater, causing dielectric break down of flushing liquid 22, and produces an electric arc. The electric arc causes material to be removed (i.e., eroded) from workpiece 16 and also from electrode 18 thereby causing electrode consumption. Once the current stops, flushing liquid 22 delivered to spark-gap G enables particles (debris) to be flushed away and out of hole 20 (i.e., machining channel), and the insulating properties of flushing liquid 22 are restored. Electrode 18 may have a tubular configuration so that a jet of flushing liquid 22 may be delivered to spark-gap G via a central bore of electrode 18.

Electrode 18 may include a rotatable tube configured to receive flushing liquid 22 therethrough while drilling hole 20 in workpiece 16. Electrode 18 may be made of a suitable metallic material or graphite. Electrode 18 may have a longitudinal electrode axis EA that extends centrally of the bore of electrode 18. Electrode axis EA may also correspond to a central axis of hole 20 that is being drilled using electrode 18. Electrode 18 may be held in electrode holder 26 (e.g., chuck), which may be rotatable about electrode axis EA so that electrode 18 may be rotated about electrode axis EA as electrode 18 is plunged into workpiece 16 during drilling of hole 20. EDM 12 may include a suitable computer numerical control (CNC) motion system 28 that may be operatively connected to electrode holder 26 and/or to base 14. CNC motion system 28 may drive and control relative movement between electrode 18 and workpiece 16 along one or more axes of motion. For example, CNC motion system 28 may drive the movement of workpiece 16 relative to electrode 18. Instead, or in addition, CNC motion system 28 may drive the movement of electrode 18 relative to workpiece 16. CNC motion system 28 may define a linear axis to effectuate plunging of electrode 18 into workpiece 16 and a rotation axis to effectuate rotation of electrode 18 about electrode axis EA. CNC motion system 28 may define one or more additional linear axes and optionally one or more additional rotary (e.g., tilt) axes.

Workpiece 16 may be made of an electrically conductive material. Workpiece 16 may be made of a metallic material. In some embodiments, workpiece 16 may be made of a relatively hard material that is difficult to machine using other conventional material-removal processes. In various embodiments, workpiece 16 may be made of an aerospace-grade material that is commonly used for part(s) (e.g., rotor blade, vanes, shrouds) of gas turbine engines. In various embodiments, workpiece 16 may be made of materials such as carbides, ceramics, nickel alloys, titanium alloys and hardened (e.g., tool) steels for example.

Hole 20 may be a blind hole and may have entrance 20A and closed end 20B (i.e., bottom) of hole 20. Workpiece 16 may have first side 16A (e.g., first surface) and opposite second side 16B (e.g., second surface). In some embodiments, first side 16A and second side 16B may be substantially flat and parallel to each other but this may not be necessarily the case. In some embodiments, first side 16A and second side 16B may be non-parallel. In some embodiments, first side 16A and/or second side 16B may be curved.

Hole 20 may be drilled from first side 16A of workpiece 16 so that entrance 20A of hole 20 may be disposed on first side 16A of workpiece 16. In other words, first side 16A of workpiece 16 may face electrode holder 26 during drilling of hole 20. Opposite second side 16B of workpiece 16 may interface with (e.g., contact) base 14 and be supported by base 14.

Sensor 30 may be operable to sense depth D of hole 20 during drilling of hole 20. For example, sensor 30 may be operable to directly measure the position of closed end 20B of hole 20 relative to second side 16B of workpiece 16 (i.e., first thickness T1) using ultrasound energy. Sensor 30 may be operable as a thickness gauge. First thickness T1 may be a distance within workpiece 16 extending from second side 16B to closed end 20B of hole 20. Depth D of hole 20 may be related to first thickness T1 by subtracting first thickness T1 from second thickness T2, which may be the total thickness of workpiece 16 at the location of hole 20 so that D = T2 - T1. In various embodiments, second thickness T2 may be a known value or may be sensed using sensor 30 or another ultrasonic sensor.

In some embodiment, sensor 30 may include an ultrasonic transmitter for converting electrical signals into ultrasound and an ultrasonic receiver for converting ultrasound into electrical signals. In some embodiments, sensor 30 may include an ultrasonic transceiver for transmitting and receiving ultrasound. In some embodiments, sensor 30 may include one or more piezoelectric transducers. In some embodiments, sensor 30 may include one or more electromagnetic acoustic transducers. Sensor 30 may emit one or more input sound waves 32 into the material of workpiece 16 and sense one or more reflected sound waves reflected directly from the interface presented by closed end 20B (i.e., bottom) of hole 20.

Sensor 30 may be installed at a suitable location other than on electrode 18 so that sensor 30 may not interfere with the electric discharge drilling process and so that the electric discharge drilling process (including debris flushing) may not interfere with the acquisition of the ultrasonic thickness measurement(s). For example, sensing depth D of hole 20 may be performed directly using closed end 20B of hole 20 without having to sense across spark-gap G. In some embodiments, the ability to perform ultrasonic sensing may be substantially unaffected by electric discharges or debris flushing, and the ultrasonic thickness measurement(s) may be acquired substantially independently of the electric discharge drilling process. For example, ultrasonic sensing may be performed intermittently or continuously during the drilling process. Ultrasonic sensing may optionally be performed even during (i.e., simultaneously with) one or more electric discharges. Ultrasonic sensing may optionally be performed without interruptions throughout essentially the entire (i.e., 100%) of the drilling process. In some embodiments, the ultrasonic characterization described herein may promote accuracy, repeatability and reliability of depth measurements.

In some embodiments, sensor 30 may be part of an ultrasonic probe, which may be ultrasonically coupled to (e.g., second side 16B of) workpiece 16. Such ultrasonic probe may be in direct contact with workpiece 16 or may be ultrasonically coupled to workpiece 16 via a suitable couplant. In some embodiments, sensor 30 may be ultrasonically coupled to workpiece 16 via a suitable ultrasonic wedge depending on the relative positioning and orientation of sensor 30 and hole 20.

In some embodiments, sensor 30 (e.g., ultrasonic probe) may be installed on (e.g., mounted, fastened and/or bonded to) base 14, which may not be consumed during the electrical discharge drilling process. For example, base 14 may be instrumented and include an assembly of parts including sensor 30 where sensor 30 may be considered part of the instrumented base 14. In some embodiments, base 14 may include a block of (e.g., metallic) material and sensor 30 may be received inside an aperture formed in base 14. Base 14 may be reusable for drilling into a plurality of workpieces 16.

Sensor 30 may be ultrasonically coupled to second side 16B of workpiece 16 and may be oriented toward electrode 18 and also toward hole 20 that is being drilled. Sensor 30 may have sensor axis SA defining a principal direction along which input sound wave 32 is emitted from sensor 30. Sensor 30 may have a field of view (i.e., zone of sensitivity) that is generally conical in shape. Sensor axis SA may extend substantially centrally of the field of view. In some embodiments, sensor 30 may be positioned so that closed end 20B of hole 20 is within the field of view of sensor 30. In various embodiments, sensor 30 and hole 20 may be positioned so that sensor axis SA is parallel or non-parallel to electrode axis EA during drilling of hole 20. In some embodiments, sensor 30 and hole 20 may be positioned so that sensor axis SA is substantially coaxial with electrode axis EA.

Base 14 may include (e.g., planar) support surface 14A supporting (e.g., interfacing with, contacting) second side 16B of workpiece 16. In various embodiments, electrode 18 and hole 20 may be oriented so that electrode axis EA is normal or non-normal to support surface 14A. In various embodiments, sensor 30 may be oriented so that sensor axis SA is normal or non-normal to support surface 14A.

Sensor 30 may be operatively coupled to (e.g., in data communication with) UTM controller 34, which may control the operation of sensor 30 and also acquire data based on signals received from sensor 30. In some embodiments, UTM controller 34 may include a suitable computer. UTM controller 34 may configured to operate as a data recorder to record data based on signals received from sensor 30. In some embodiments, UTM controller 34 may configured to perform data processing to interpret the signals received from sensor 30. For example, UTM controller 34 may be configured to compute and optionally store values of first thickness T1, second thickness T2 and/or depth D with respect to time.

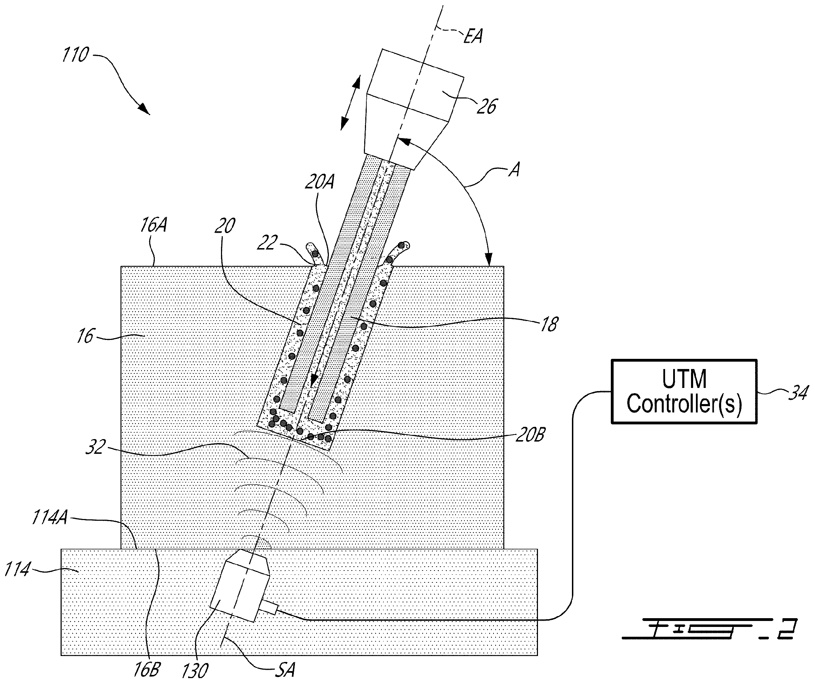

FIG. 2 is a schematic cross-sectional view of part of another system 110 for characterizing the electrical discharge drilling process using ultrasound. System 110 may include elements of system 10 previously described above. Like elements are identified using like reference numerals. System 110 may include EDM 12 of system 10 or another EDM. Some elements of EDM 12 previously described above have been omitted from FIG. 2 for clarity. System 110 shows an instance of EDM 12 where electrode 18 has been tilted so that attack angle A is non-normal to first side 16A of workpiece 16 (e.g., less than 90 degrees and more than 45 degrees). Attack angle A may represent an angular orientation of electrode axis EA relative to a (e.g., planar) top surface of workpiece 16.

In contrast with system 10, system 110 may include base 114 including ultrasonic sensor 130 that is configured to accommodate the tilted orientation of hole 20. In the illustrated orientation of electrode 18, electrode axis EA and hole 20 may be oriented to be non-normal to support surface 114A of base 114 supporting workpiece 16. Sensor 130 may be different from or substantially identical to sensor 30. Sensor 130 may have a same principle of operation as sensor 30 previously described above. In contrast with sensor 30, sensor 130 may be tilted to accommodate the tilting of electrode 18. The tilt angle of sensor 130 may be selected so that the field of view of sensor 130 may cover a desired range of movement of closed end 20B of hole 20 as hole 20 is being drilled. For example, sensor 130 may be oriented so that sensor axis SA is substantially parallel to and/or coaxial with electrode axis EA in some embodiments.

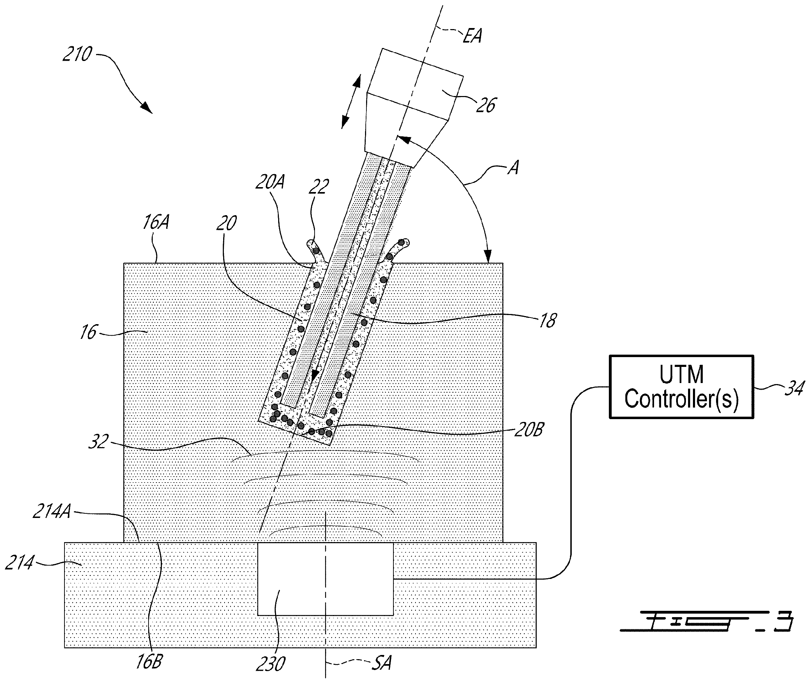

FIG. 3 is a schematic cross-sectional view of part of another system 210 for characterizing the electrical discharge drilling process using ultrasound. System 210 may include elements of system 10 previously described above. Like elements are identified using like reference numerals. System 210 may include EDM 12 of system 10 or another EDM. Some elements of EDM 12 previously described above have been omitted from FIG. 3 for clarity. System 210 shows an instance of EDM 12 where electrode 18 has been tilted so that attack angle A is non-normal to first side 16A of workpiece 16.

In contrast with system 10, system 210 may include base 214 including ultrasonic sensor 230 that is configured to accommodate the tilted orientation of hole 20. In the illustrated orientation of electrode 18, electrode axis EA and hole 20 may be oriented to be non-normal to support surface 214A of base 214 supporting workpiece 16. Sensor 230 may have the same principle of operation as sensor 30 previously described above. In contrast with sensor 30, sensor 230 may have a different (e.g., larger, wider) field of view to accommodate the tilting of electrode 18 without having to tilt sensor 230. Accordingly, sensor axis SA may be non-parallel to and non-coaxial with electrode axis EA. In some embodiments, sensor axis SA may be normal to support surface 214A of base 214 while electrode axis EA is non-normal to support surface 214A of base 214.

The field of view of sensor 230 may be selected to cover a desired range of movement of closed end 20B of hole 20 as hole 20 is being drilled. For example, the field of view of sensor 130 may be selected to include both entrance 20A of hole 20 and the final position of closed end 20B of hole 20 so that an entire range of movement of closed end 20B of hole 20 may be sensed throughout the entire process of drilling hole 20.

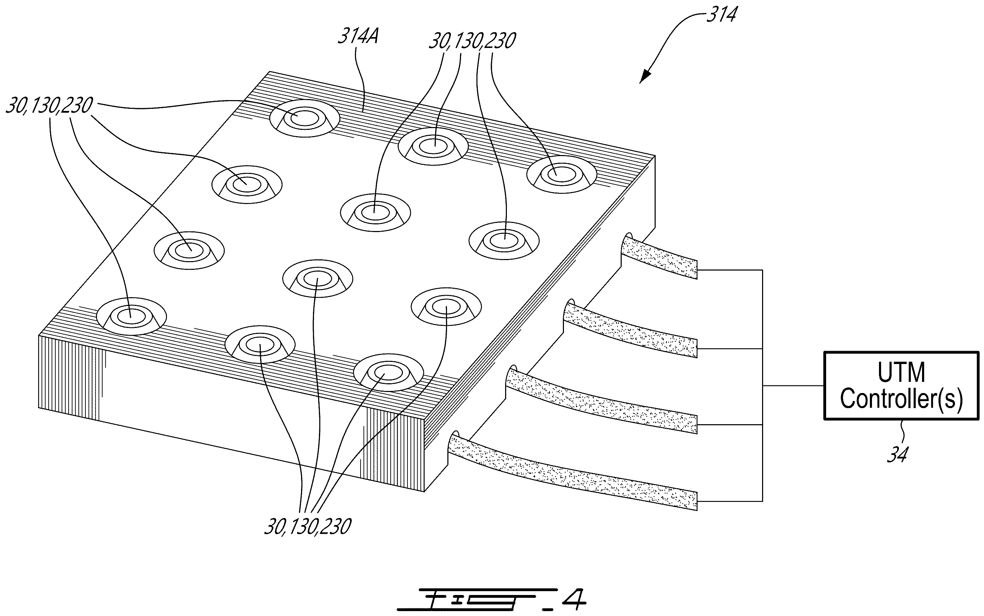

FIG. 4 is a perspective view of an exemplary instrumented base 314 that may be used for supporting workpiece 16 in any one of systems 10, 110 and 210. Base 314 may be made from a metallic block including (e.g., planar) support surface 314A supporting (e.g., interfacing with, contacting) second side 16B of workpiece 16. Base 314 may include one or more sensors 30, 130, 230 installed thereon and which may be operationally connectable to one or more UTM controllers 34. In some embodiments, base 314 may include a plurality (e.g., an array) of sensors 30, 130, 230 and workpiece 16 may be sufficiently large to cover two or more sensors 30, 130, 230. The use of a plurality of sensors 30, 130, 230 may permit a single machine setup to be used to drill a plurality of holes 20 optionally having different characteristics and/or using different process parameters in order to perform a more comprehensive process characterization in a single machine setup (e.g., using a single workpiece 16).

In some embodiments, sensors 30, 130, 230 may be embedded (i.e., housed) inside of base 314. For example, sensors 30, 130, 230 may be received inside respective apertures formed in base 314 and opening to support surface 314A. In some embodiments, ultrasonic probes incorporating sensors 30, 130, 230 may be recessed into base 314 to be substantially flush with support surface 314A to facilitate the ultrasonic coupling with workpiece 16 via direct contact.

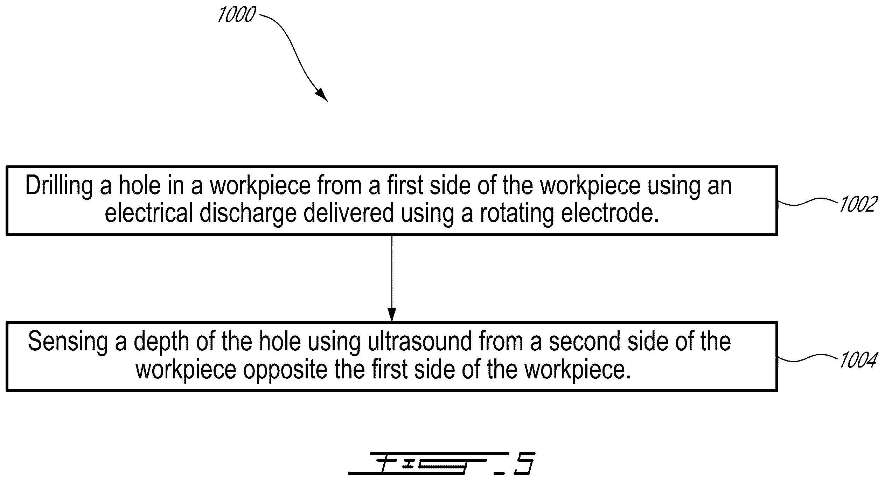

FIG. 5 is a flow diagram of an exemplary method for characterizing an electrical discharge drilling process using ultrasound. Method 1000 may be performed using any one of systems 10, 110, 210 disclosed herein or using other system(s). Method 1000 may include elements of systems 10, 110, 210. Method 1000 may include other actions disclosed herein. In various embodiments, method 100 may include:
drilling hole 20 in workpiece 16 from first side 16A of workpiece 16 using an electrical discharge delivered using (e.g., rotating) electrode 18 (block 1002); and
during the drilling of hole 20, sensing depth (e.g., depth D) of hole using ultrasound from second side 16B of workpiece 16 opposite first side 16A of workpiece 16 (block 1004).

As used herein "depth" of hole 20 may encompass a position of closed end 20B of hole 20 relative to a suitable reference location (i.e., datum). For example, the depth of hole 20 may encompass a position of closed end 20B of hole 20 relative to sensor 30, 130, 230. For example, the depth of hole 20 may encompass first thickness T1 shown in FIG. 1. Specific depth D of hole 20 as labeled in FIG. 1 may be taken to be relative to first side 16A of workpiece 16 and along electrode axis EA, which may correspond to the central longitudinal axis of hole 20. Hole 20 may have a substantially circular cross-sectional profile taken in a plane that is normal to electrode axis EA. For example, depth D may be determined by subtracting first thickness T1 from second thickness T2 as explained above in relation to FIG. 1. Sensing depth D may include: emitting input sound wave 32 into workpiece 16 via second side 16B of workpiece 16; and sensing a reflected sound wave reflected from closed end 20B of hole 20 via second side 16B of workpiece 16.

Since sensing of depth D using ultrasound may be substantially independent of the electrical discharge drilling process, sensing of depth D may be performed during some or any events associated with the electrical discharge drilling process. For example, sensing of depth D may be performed during (i.e., simultaneously with) the electrical discharge. Sensing of depth D may be performed during (i.e., simultaneously with) flushing of debris out of hole 20 using flushing liquid 22. Sensing of depth D may be performed during (i.e., simultaneously with) the rotation of electrode 18. Sensing of depth D may be performed during (i.e., simultaneously with) the advancement (i.e., plunging) of electrode 18 into workpiece 16.

Method 1000 may be used to determine a consumption of rotating electrode 18. For example, method 1000 may include: sensing a first depth of hole 20 when electrode holder 26 is at a first position (e.g., along axis Z in FIG. 1) relative to workpiece 16 during the drilling of hole 20; and after sensing the first depth of hole 20, sensing a second depth of hole 20 when electrode holder 26 is at a second position (e.g., along axis Z in FIG. 1) relative to workpiece 16 different from the first position during the drilling of hole 20. In other words, a difference between a plunge distance of electrode holder 26 and an advancement of closed end 20B of hole 20 may be used to quantify a change in length of electrode 18 and hence an amount of consumption of electrode 18. This approach may also be used to quantify a consumption of electrode 18 as a function of hole depth and/or as a function of hole diameter.

Method 1000 may be used with any one of bases 14, 114, 214, 314. Method 1000 may be used to characterize the electrical discharge drilling process using a plurality of holes 20 drilled in the same workpiece 16 with the same electrode 18 or with different electrodes. Method 1000 may be used to characterize the electrical discharge drilling process using a plurality of workpieces 16. Method 1000 may be used to characterize the electrical discharge drilling process using holes 20 of different diameters and/or depths D. Method 1000 may be used to characterize the electrical discharge drilling process using holes 20 drilled using different process parameters. For example, method 1000 may include: after drilling a first hole 20 in workpiece 16, drilling a second hole 20 in workpiece 16 from first side 16A of workpiece 16 using the same electrode 18 or another electrode; and during the drilling of second hole 20, sensing depth D of second hole 20 using an additional (i.e., second) sensor 30, 130, 230 (e.g., ultrasonic probe) embedded into base 314.

Further aspects of method 1000 are described below in reference to the subsequent figures.

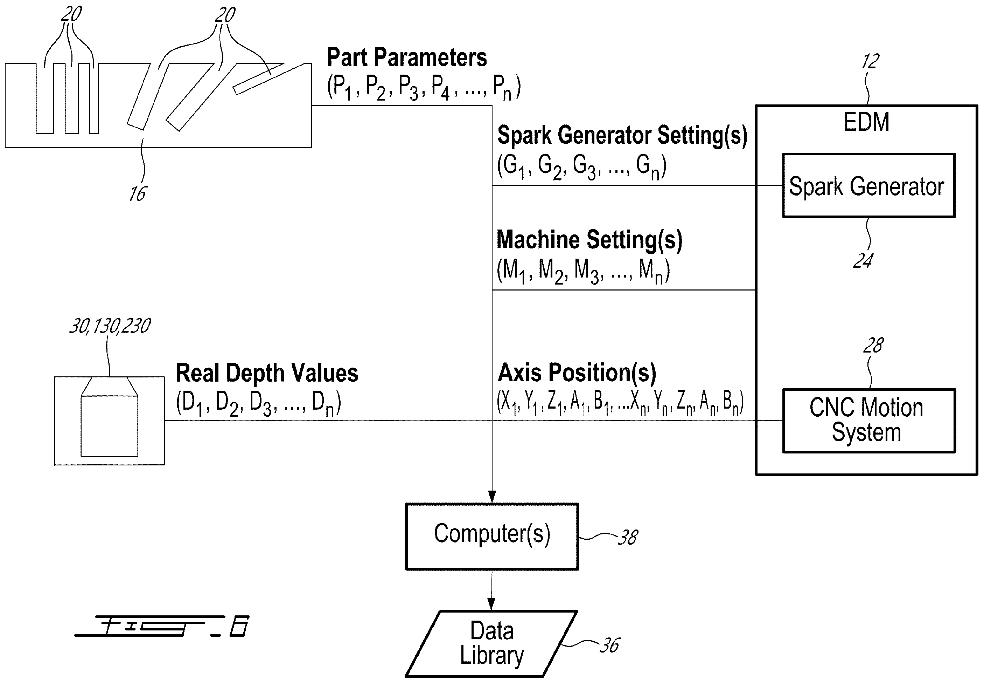

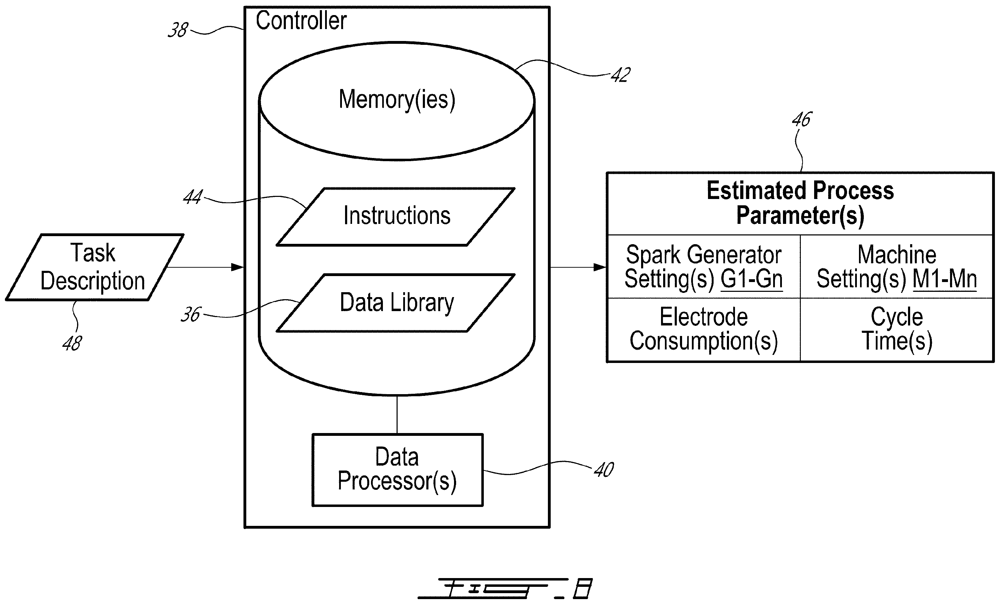

FIG. 6 is a schematic illustration of a method of characterizing the electrical discharge drilling process and constructing a suitable data library 36 characterizing the electrical discharge drilling process. Data library 36 may be used in method 1000 and may be stored in digital format. Data library 36 may include various sources of data consolidated through the use of (e.g., monitoring) computer 38, which may be in data communication with EDM 12 and/or with UTM controller 34. Data library 36 may have the form of a database, a look-up table, one or more equations and/or one or more graphs representing relationships. In some embodiments, data library 36 may have the form of a digital mathematical (e.g., physics based, statistical) model of the electrical discharge drilling process. Data library 36 may be used to determine (i.e., predict) one or more estimated process parameters 46 (shown in FIG. 8) that provide guidance for performing future electrical discharge drilling tasks.

Data library 36 may include data indicative of one or more real depths D1-Dn of holes 20 sensed during the drilling of holes 20 and actual process parameters used to drill the respective holes 20. Data library 36 may include data indicative of one or more part parameters P1-Pn of holes 20 sensed during the drilling of holes 20. Part parameters P1-Pn may include an identification of materials of workpieces 16, values of second (i.e., total) thickness T2 of workpiece 16, values of attack angles A of respective holes 20 and the respective diameters of holes 20. Data library 36 may include data indicative of one or more spark generator settings G1-Gn used by spark generator 24 of EDM 12 during the drilling of the respective holes 20. Spark generator settings G1-Gn may include values of amperages, voltages, on-times and off-times. Data library 36 may include data indicative of one or more machine settings M1-Mn used by EDM 12 during the drilling of the respective holes 20. Machine settings M1-Mn may include values of temperatures, other conditions, injection pressure, rotation speed of electrode 18 in revolutions-per-minute (RPM), feed (e.g., plunge) rate of electrode 18 during drilling, the material of electrode 18 and the diameter of electrode 18. Data library 36 may include data indicative of axis positions X₁, Y₁, Z₁, A₁, B₁, ...Xₙ, Yₙ, Zₙ, Aₙ, Bₙ of CNC motion system 28 of EDM 12. Axis positions X₁, Y₁, Z₁, A₁, B₁, ...Xₙ, Yₙ, Zₙ, Aₙ, Bₙ (e.g., of electrode holder 26) in conjunction with real depth values D1-Dn may be used to determine an overall total electrode consumption for an entire hole 20 and/or determine the electrode consumption as a function of the depth of the hole 20. The feed rate of electrode 18 or other time scale may also permit cycle times, material removal rates and electrode consumption rates to be determined. The knowledge of electrode consumption rates and amounts may be used to adjust electrode (i.e., tool) offsets accordingly between holes 20 during production and improve the accuracy of the electrical discharge drilling process.

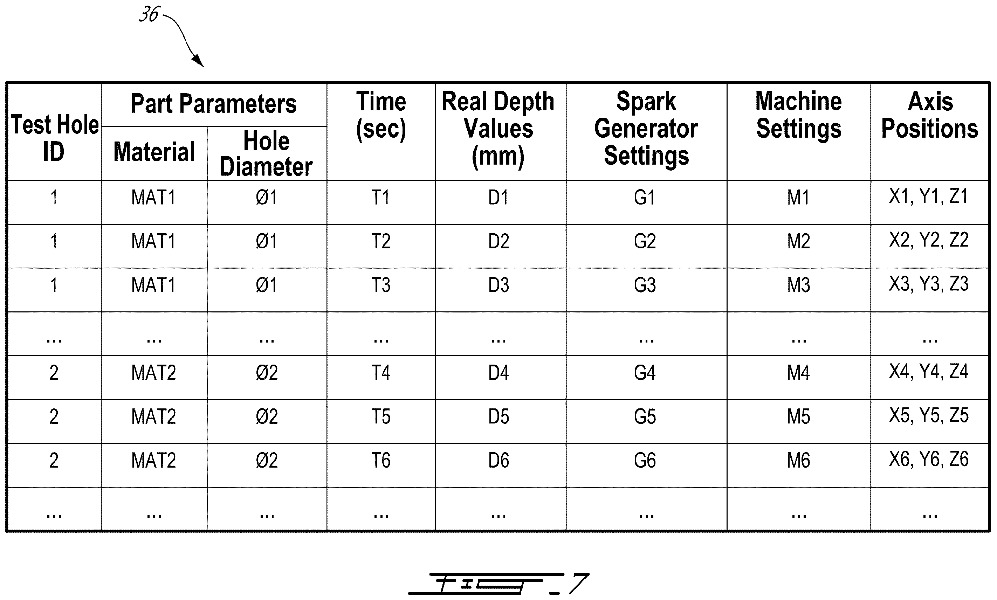

FIG. 7 shows an exemplary data library 36 in tabular format constructed to characterize the electrical discharge drilling process. Data library 36 may include data associated with a plurality of holes 20 of the same and/or of different materials (e.g., MAT1 and MAT2), and of the same or different hole diameters (e.g., Ø1 and Ø2). Entries (e.g., rows) in data library 36 may be associated with different measurements of depth values D1-D6 acquired at different times T1-T6. Entries (e.g., rows) in data library 36 may also be respectively associated with spark generator settings G1-G6, machine settings M1-M6 and axis positions (e.g., X, Y, Z, A, B). Each spark generator settings G1-G6 and machine settings M1-M6 identified as a single letter and number in data library 36 may be indicative of a single value or of a group of values. Axis positions are shown as having three coordinates (e.g., X, Y and Z) but it is understood that CNC motion system 28 may have additional or fewer axes of motion.

FIG. 8 is a schematic diagram of computer 38 that may optionally be used to generate estimated process parameters 46 that may be useful in planning and/or executing a future electrical discharge drilling task based on the characterization of the electrical discharge drilling process as described herein. Computer 38 may be the same computer or a different computer than that used for consolidating data library 36. Computer 38 may include one or more data processors 40 (referred hereinafter in the singular as "processor 40") and non-transitory machine-readable memory(ies) 42 (referred hereinafter in the singular). Memory(ies) 42 may have machine-readable instructions 44 stored thereon that may be configured to cause processor 40 to perform one or more tasks disclosed herein.

Processor(s) 40 may include any suitable device(s) configured to cause a series of steps to be performed by computer 38 so as to implement a computer-implemented process such that instructions 44, when executed by computer 38 or other programmable apparatus, may cause the functions/acts disclosed herein to be executed. Processor(s) 40 may include, for example, any type of general-purpose microprocessor or microcontroller, a digital signal processing (DSP) processor, an integrated circuit, a field programmable gate array (FPGA), a reconfigurable processor, other suitably programmed or programmable logic circuits, or any combination thereof.

Memory 42 may include any suitable machine-readable storage medium. Memory 42 may include non-transitory computer-readable storage medium such as, for example, but not limited to, an electronic, magnetic, optical, electromagnetic, infrared, or semiconductor system, apparatus, or device, or any suitable combination of the foregoing. Memory 42 may include any storage means (e.g., devices) suitable for retrievably storing machine-readable instructions 44 executable by processor(s) 40.

Computer 38 may, via instructions 44, be configured to generate an output (i.e., data) indicative of one or more estimated process parameter(s) 46 for a future electrical discharge drilling task defined by task description 48. Task description 48 may include part parameters P1-Pn that are intended to be achieved by electrical discharge drilling. Based on task description 48 and data library 36, suitable estimated process parameter(s) 46 may be generated. In some embodiments, estimated process parameter(s) 46 may be generated by using data library 36 as a look-up table to select parameters that are an exact match or a best match to task description 48 using a suitable best-fit algorithm. In some embodiments, estimated process parameter(s) 46 may be generated by using interpolation and/or extrapolation using entries in data library 36. In some embodiments, estimated process parameter(s) 46 may be generated by using a suitable mathematical (e.g., physics based, statistical) model (i.e., algorithm) that is based on the information in data library 36.

Estimated process parameter(s) 46 may include one or more of: spark generator setting(s) G1-Gn suitable for performing the future electrical discharge drilling task; machine setting(s) M1-Mn suitable for performing the future electrical discharge drilling task; an expected cycle time for performing some or all of the future electrical discharge drilling task; and/or an expected electrode consumption for performing the future electrical discharge drilling task. One or more of estimated process parameter(s) 46 may be useful for estimating costs and consumables associated with the future electrical discharge drilling tasks. One or more of estimated process parameter(s) 46 may be suitable for controlling EDM 12 during the future electrical discharge drilling tasks.

In some embodiments, the selection of estimated process parameter(s) 46 may additionally be based on one or more constraints to guide the selection of estimated process parameter(s) 46 and/or provide optimal estimate process parameter(s) 46 that satisfy the constraint(s). Such constraint(s) may include cost limits or ranges, cycle time limits or ranges, or electrode consumption limits or ranges for example. Constraint(s) may include an objective to minimize cycle time or cost, or an objective that specifies a trade-off between cycle time and electrode consumption for example.

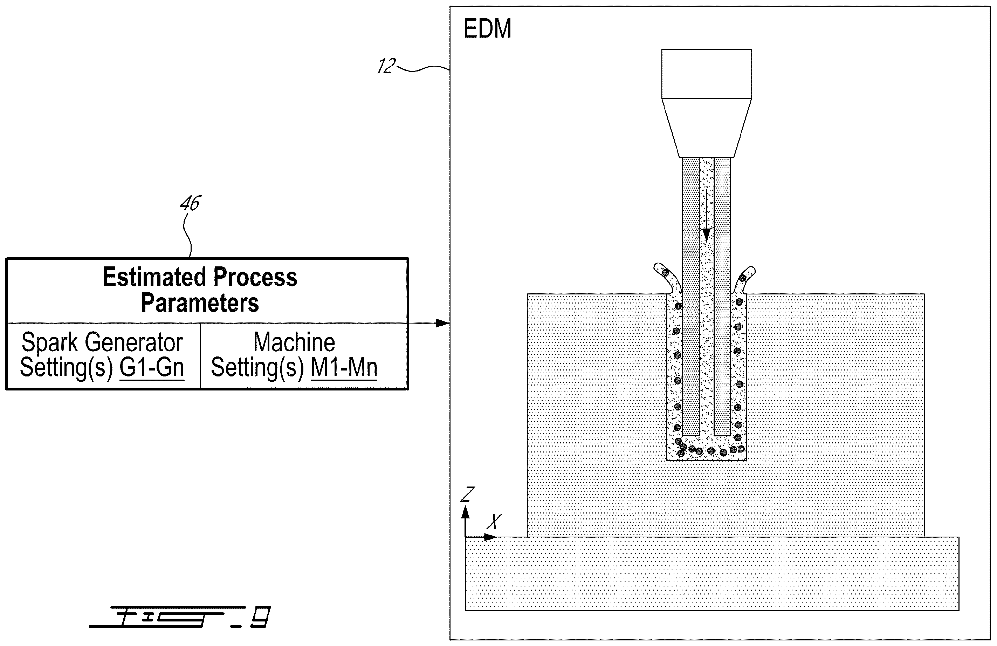

FIG. 9 is a schematic diagram illustrating estimated process parameter(s) 46 being supplied to a version of EDM 12 that is used in a production environment for drilling into components intended for service. EDM 12 may not have an instrumented base and ultrasonic monitoring may not be necessary during production. However, estimated process parameter(s) 46 that have been selected or derived from data library 36 may be used to perform a new electrical discharge drilling task using EDM 12. For example, one or more spark generator settings G1-Gn and/or one or more machine setting(s) M1-Mn may be determined using data library 36 and then used to control one or more aspects of operation of EDM 12.

The embodiments described in this document provide non-limiting examples of possible implementations of the present technology. Upon review of the present disclosure, a person of ordinary skill in the art will recognize that changes may be made to the embodiments described herein without departing from the scope of the present technology.

## Claims

1. An electrical discharge drilling machine comprising:
a base (14; 114; 214; 314) for supporting a workpiece (16);
an electrode (18) operable to drill a hole (20) in the workpiece (16) using an electrical discharge when the workpiece (16) is supported by the base (14; 114; 214; 314); and
an ultrasonic sensor (30; 130; 230) installed on the base (14; 114; 214; 314) and oriented toward a location of the workpiece (16) when the workpiece (16) is supported by the base (14; 114; 214; 314), the ultrasonic sensor (30; 130; 230) being operable to sense a depth (D) of the hole (20) during drilling of the hole (20) by:
emitting an input sound wave (32) into the workpiece (16); and
sensing a reflected sound wave reflected from a closed end (20B) of the hole (20).

2. The electrical discharge drilling machine as defined in claim 1, wherein the ultrasonic sensor (30; 130; 230) is received inside an aperture formed in the base (14; 114; 214; 314).

3. The electrical discharge drilling machine as defined in claim 1 or 2, wherein:
the ultrasonic sensor (30; 130; 230) is one of a plurality of ultrasonic sensors; and
the ultrasonic sensors are received inside respective apertures formed in the base (14; 114; 214; 314).

4. The electrical discharge drilling machine as defined in claim 1, 2 or 3, wherein the electrode (18) includes a rotatable tube configured to receive a flushing liquid (22) therethrough while drilling the hole (20) in the workpiece (16).

5. The electrical discharge drilling machine as defined in claim 4, wherein a longitudinal axis (EA) of the electrode (18) is non-normal to a support surface (14A; 114A; 214A; 314A) of the base (14; 114; 214; 314) configured to support the workpiece (16).

6. A system (10; 110; 210) for characterizing an electrical discharge drilling process using ultrasound, the system (10; 110; 210) comprising:
a workpiece (16) having a first side (16A) and a second side (16B) opposite the first side (16A);
a rotatable tubular electrode (18) configured to drill a hole (20) in the workpiece (16) from the first side (16A) of the workpiece (16) using an electrical discharge; and
an ultrasonic sensor (30; 130; 230) coupled to the second side (16B) of the workpiece (16) and oriented toward the rotatable tubular electrode (18), the ultrasonic sensor (30; 130; 230) being operable to sense a depth (D) of the hole (20) during drilling of the hole (20) by:
emitting an input sound wave (32) into the workpiece (16) via the second side (16B) of the workpiece (16); and
sensing a reflected sound wave reflected from a closed end (20B) of the hole (20) via the second side (16B) of the workpiece (16).

7. The system (10; 110; 210) as defined in claim 6, comprising a base (14; 114; 214; 314) supporting the workpiece (16), the ultrasonic sensor (30; 130; 230) being installed on the base (14; 114; 214; 314),
wherein, optionally, the ultrasonic sensor (30; 130; 230) is received inside an aperture formed in the base (14; 114; 214; 314),
wherein, further optionally:
the ultrasonic sensor (30; 130; 230) is one of a plurality of ultrasonic sensors; and
the ultrasonic sensors are received inside respective apertures formed in the base (14; 114; 214; 314).

8. The system (10; 110; 210) as defined in claim 7, wherein a longitudinal axis (EA) of the rotatable tubular electrode (18) is non-normal to a support surface (14A; 114A; 214A; 314A) of the base (14; 114; 214; 314) supporting the workpiece (16),
wherein, optionally, the ultrasonic sensor (30; 130; 230) has a field of view that includes both an entrance (20A) of the hole (20) and the closed end (20B) of the hole (20) at a final depth of the hole (20).

9. The system (10; 110; 210) as defined in claim 6, 7 or 8, wherein the ultrasonic sensor (30; 130; 230) is part of an ultrasonic probe that is in contact with the second side (16B) of the workpiece (16),
wherein, optionally, the ultrasonic probe is part of a base (14; 114; 214; 314) supporting the workpiece (16) during the drilling of the hole (20).

10. A method of characterizing an electrical discharge drilling process using ultrasound, the method comprising:
drilling a hole (20) in a workpiece (16) from a first side (16A) of the workpiece (16) using an electrical discharge delivered using a rotating electrode (18);
during the drilling of the hole (20), sensing a depth (D) of the hole (20) using ultrasound from a second side (16B) of the workpiece (16) opposite the first side (16A) of the workpiece (16), the sensing of the depth (D) of the hole (20) including:
emitting an input sound wave (32) into the workpiece (16) via the second side (16B) of the workpiece (16); and
sensing a reflected sound wave reflected from a closed end (20B) of the hole (20) via the second side (16B) of the workpiece (16).

11. The method as defined in claim 10, comprising determining a consumption of the rotating electrode (18) by:
sensing a first depth of the hole (20) when a holder of the rotating electrode (18) is at a first position during the drilling of the hole (20); and
after sensing the first depth of the hole (20), sensing a second depth of the hole (20) when the holder of the rotating electrode (18) is at a second position different from the first position during the drilling of the hole (20).

12. The method as defined in claim 10 or 11, wherein sensing the depth of the hole (20) is performed using an ultrasonic probe (30; 130; 230) embedded into a base (14; 114; 214; 314) supporting the workpiece (16) during the drilling of the hole (20),
wherein, optionally:
the hole (20) is a first hole;
the ultrasonic probe (30; 130; 230) is a first ultrasonic probe; and
the method includes:
drilling a second hole (20) in the workpiece (16) from the first side (16A) of the workpiece (16) using the rotating electrode (18) or another rotating electrode (18); and
during the drilling of the second hole (20), sensing a depth of the second hole (20) using a second ultrasonic probe (30; 130; 230) embedded into the base (14; 114; 214; 314).

13. The method as defined in claim 10, 11 or 12, wherein sensing the depth of the hole (20) using ultrasound includes sensing the reflected sound wave simultaneously with the electrical discharge.

14. The method as defined in claim 10, 11, 12 or 13, comprising:
constructing a data library (36) including data indicative of a plurality of depths of the hole (20) sensed during the drilling of the hole (20) and actual process parameters used to drill the hole (20);
receiving a task description (48) describing a future electrical discharge drilling task;
using the task description (48) and the data library (36), generating one or more estimated process parameters (46) for the future electrical discharge drilling task; and
using the one or more estimated process parameters (46) to perform the future electrical discharge drilling task.

15. The method as defined in claim 14, wherein the one or more estimated process parameters (46) include:
a cycle time for performing the future electrical discharge drilling task;
an electrode consumption for performing the future electrical discharge drilling task;
a spark generator (24) setting suitable for performing the future electrical discharge drilling task; and/or
a setting of an electrical discharge machine used for performing the future electrical discharge drilling task.
